# NEUE EUROPÄISCHE PATENTSCHRIFT

(11) **EP 0 237 708 B2**
(45) Veröffentlichungstag und Bekanntmachung des Hinweises auf die Entscheidung über den Einspruch: **13.03.1996**
(45) Hinweis auf die Patenterteilung: 22.08.1990
(21) Anmeldenummer: 87100374.5
(22) Anmeldetag: 14.01.1987
(51) Int. Cl.: A61C 17/14, A61C 17/06

(54) **Zahnärztliche Absaugeinrichtung**
Dental suction device
Dispositif d'aspiration dentaire

(30) Priorität: 17.01.1986 DE 3601254
(43) Veröffentlichungstag der Anmeldung: 23.09.1987
(73) Patentinhaber: Dürr-Dental GmbH & Co. KG, D-74321 Bietigheim-Bissingen (DE)
(72) Erfinder: Dürr, Walter, Dipl.-Ing.(FH), D-7250 Leonberg 7 (DE); Hofmann,Hans-Joachim, Dipl.-Ing.(FH), D-7064 Remshalden 3 (DE); Bollmann, Andreas, Dipl.-Ing.(FH), D-7121 Ingersheim 2 (DE)
(74) Vertreter: Ostertag, Reinhard

(56) Entgegenhaltungen:
- EP-A- 0 102 000
- EP-A- 0 242 358
- WO-A-86/03669
- DE-A- 1 766 315
- DE-A- 3 521 929
- DE-A- 3 521 929
- FR-A- 2 463 748
- US-A- 3 138 873

## Beschreibung

Die Erfindung betrifft eine zahnärztliche Absaugeinrichtung gemäß dem Oberbegriff des Anspruches 1.

Bei derartigen bekannten Absaugeinrichtungen ist die Unterdruckpumpe über einen Schlauch mit einem räumlich von ihr getrennten Flüssigkeitsabscheidezyklon verbunden. Die im Zyklon abgetrennte Flüssigkeit wird über ein Schleusensystem an die Abwasserkanalisation abgegeben. Dies bedeutet, daß das Abgabeeende des Zyklons über der Abflußstelle der Abwasserkanalisation liegen muß. Für manche Anwendungen ist es jedoch vorteilhaft, wenn man bezüglich des Anbringungsortes des Zyklons oder einer anderen Luft/Flüssigkeits-Trenneinrichtung vollständig frei ist. Eine solche Freiheit könnte man z.B. dadurch gewinnen, daß man an die Flüssigkeitsaustragöffnung der Trenneinrichtung eine Flüssigkeitspumpe anschließt (s. EP-A 0 102 000), durch welche die abgetrennte Flüssigkeit zwangsweise auf ein höheres Niveau gefördert wird. Dies bedeutet aber zum einen einen deutlich erhöhten apparativen Aufwand für die Trenneinrichtung, darüber hinaus muß auch zur Trenneinrichtung hin eine Netzleitung geführt werden, an welche der Antriebsmotor der Flüssigkeitspumpe angeschlossen wird.

Durch die vorliegende Erfindung soll daher eine zahnärztliche Absaugeinrichtung gemäß dem Oberbegriff des Anspruches 1 dahingehend weitergebildet werden, daß ein zwangsweises Austragen der in der Trenneinrichtung abgeschiedenen Flüssigkeit unter Überdruck erhalten wird, ohne daß ein zusätzlicher Antriebsmotor benötigt wird.

Diese Aufgabe ist erfindungsgemäß gelöst durch eine Absaugeinrichtung gemäß Anspruch 1.

Bei der erfindungsgemäßen Absaugeinrichtung ist die Luft/Flüssigkeits-Trenneinrichtung mit der Unterdruckpumpe zu einer Einheit zusammengefaßt und der sowieso zum Bewegen des umlaufenden Pumpenelementes der Unterdruckpumpe vorgesehene Antriebsmotor dreht zugleich auch ein Pumpenlaufrad, welches die aus dem zugeführten Flüssigkeits-Luftgemisch abgeschiedene Flüssigkeit, welche sich am unteren Ende der Trenneinrichtung ansammelt, zwangsweise austrägt.

Die erfindungsgemäße Absaugeinrichtung läßt sich sowohl als zentrale Absaugeinrichtung für eine Mehrzahl von Arbeitsplätzen verwenden, wie im Anspruch 12 angegeben. Sie eignet sich aber auch gut zur dezentralen Installation direkt am Arbeitsplatz, wobei ihr kompakter Aufbau und die geringe Anzahl herzustellender Anschlüsse von Vorteil sind.

Vorteilhafte Weiterbildungen der Erfindung sind in Unteransprüchen angegeben.

Die Weiterbildungen der Erfindungen gemäß den Ansprüchen 3 und 4 sind im Hinblick auf möglichst geringe radiale Abmessungen der Ansaugeinheit von Vorteil. Durch die angegebene Anordnung der Trenneinrichtung ist darüber hinaus die erforderliche Höhenbeziehung zwischen der Trenneinrichtung und der Austrageinrichtung zwangsläufig gewährleistet.

Bei einer Absaugeinrichtung gemäß Anspruch 4 sind darüber hinaus die fliegend gelagerten Wellenabschnitte nur kurz, und die Unterdruckpumpe hat großen axialen Abstand von der Trenneinrichtung, so daß auch bei kurzfristiger Überbeschickung der Trenneinrichtung dann etwa in die Luftaustrittsöffnung derselben gelangende Flüssigkeitsanteile nicht direkt in die Unterdruckpumpe gelangen.

Mit der Weiterbildung der Erfindung gemäß Anspruch 5 wird erreicht, daß stabile Schaumanteile, welche sich im angesaugten Luft/Flüssigkeitsgemisch befinden, mechanisch zerschlagen werden und so nicht in die Luftaustrittsöffnung der Trenneinrichtung gelangen.

Die Weiterbildungen der Erfindung gemäß den Ansprüchen 6 und 7 sind im Hinblick auf das Zuführen der in der Trenneinrichtung abgetrennten Flüssigkeitsanteile zum Pumpenlaufrad vorteilhaft.

Bei einer Absaugeinrichtung, wie sie im Anspruch 8 angegeben ist, können unter Verwendung des beim Stand der Technik nur zum Betreiben der Unterdruckpumpe dienenden Antriebsmotors auch Feststoffpartikel wie Amalgampartikel aus den aus dem ursprünglichen Gemisch abgetrennten Flüssigkeitsanteilen abgeschieden werden, so daß sie nicht in die Abwasserkanalisation gelangen.

Mit der Weiterbildung der Erfindung gemäß Anspruch 9 wird erreicht, daß sich der im Inneren der Zentrifugentrommel ansammelnde Schlamm aus Feststoffpartikeln jeweils beim Anhalten der Einrichtung unter Schwerkrafteinwirkung in den unter der Zentrifugentrommel liegenden Sedimentierbehälter bewegt, wo sich dann über einem Sediment aus Feststoffpartikeln ein geklärtes Flüssigkeitsvolumen ansammelt, welches beim Wiederanschalten der Einrichtung durch den vom Boden der Zentrifugentrommel getragenen Übergabe- und Rückpumpstutzen wieder ins Innere der Zentrifuge zurückgepumpt wird.

Mit der Weiterbildung der Erfindung gemäß Anspruch 10 wird erreicht, daß die Austragpumpe und gegebenenfalls die Zentrifuge zum Abscheiden von Feststoffpartikeln auch dann weiterlaufen, wenn die Einlaßöffnung der gesamten Ansaugeinheit vorübergehend nicht mit Unterdruck beaufschlagt werden darf, um keine weiteren Gemischmengen anzusaugen, da die Kapazität der Trenneinrichtung z.B. aufgrund von Schwallwasserzuführung vorübergehend überschritten ist. Unter solchen Betriebsbedingungen wird über das Umschaltventil vorübergehend Luft aus der Umgebung von der Unterdruckpumpe angesaugt.

Gemäß Anspruch 11 erfolgt die Steuerung des dem Einlaß der Unterdruckpumpe vorgeschalteten Umschaltventiles unter Verwendung des Ausgangssignales eines Flüssigkeits-Pegelfühlers, der bei Überschreiten eines vorgegebenen Flüssigkeitsniveaus in der Trenneinrichtung anspricht.

Mit der Weiterbildung der Erfindung gemäß Anspruch 14 wird erreicht, daß auch in der Zentrifugentrommel eine Trennung von Luft und Flüssigkeit durchgeführt wird. Dieser Trenneffekt kann zusätzlich zu demjenigen erhalten werden, den ein etwa ebenfalls zur Absaugeinrichtung gehörender Flüssigkeitsabscheidezyklon gewährleistet; in manchen Anwendungsfällen läßt sich sogar auf einen derartigen Zyklon vollständig verzichten, wenn die Trenneinrichtung gemäß Anspruch 14 ausgebildet ist.

Die Weiterbildung der Erfindung gemäß Anspruch 15 ist im Hinblick auf eine verbesserte Trennung von Luft und Flüssigkeit durch das Trennrohr von Vorteil.

Mit der Weiterbildung der Erfindung gemäß Anspruch 16 wird erreicht, daß die vom Trennrohr abgeschiedene Flüssigkeitsmenge hinter die Innenfläche des sich in der Zentrifugentrommel ausbildenden Wasserringes geführt wird. Diese Flüssigkeitsmenge wird somit in der Zentrifugentrommel intensiv zentrifugiert und kann nicht direkt über die Innenfläche des Wasserringes zum Sperrflansch der Zentrifugentrommel gelangen.

Nachstehend wird die Erfindung anhand von Ausführungsbeispielen unter Bezugnahme auf die Zeichnung näher erläutert. In dieser zeigen:
Figur 1: eine schematische Ansicht einer zentralen Absauganlage für drei zahnärztliche Arbeitsplätze;
Figur 2: einen axialen Teilschnitt durch die Absaugeinheit der in Figur 1 gezeigten Anlage;
Figur 3: eine ähnliche Schnittansicht wie Figur 2, in welcher jedoch eine Absaugeinheit mit integrierter Amalgamabscheidung gezeigt ist;
Figur 4: eine um 90 Grad versetzte seitliche Ansicht der Absaugeinheit nach Figur 3;
Figur 5: eine seitliche Ansicht einer weiter abgewandelten Absaugeinheit; und
Figur 6: einen ähnlichen Schnitt wie Figur 3 durch eine weiter abgewandelte Absaugeinheit.

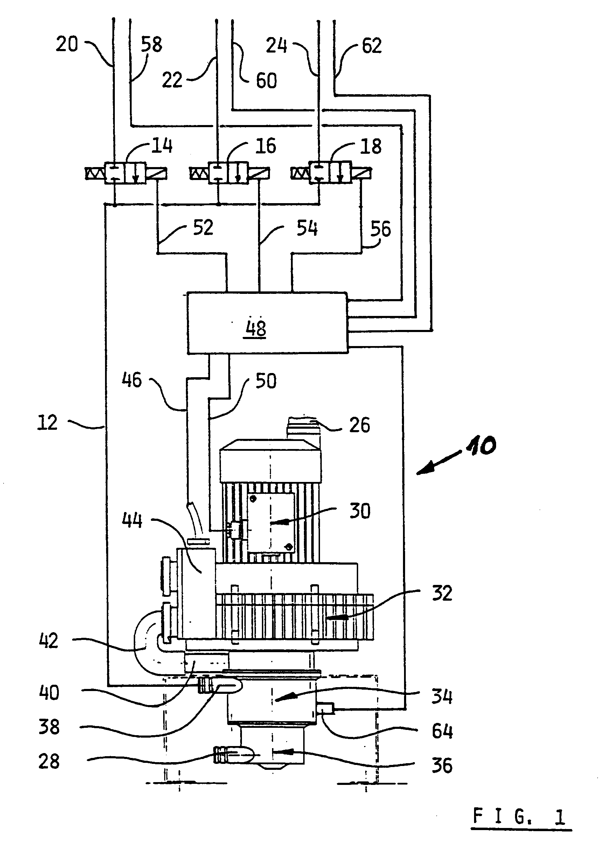

In Figur 1 ist mit 10 insgesamt eine Absaugeinheit bezeichnet, welche das an zahnärztlichen Arbeitsplätzen anfallende Gemisch aus Luft und Flüssigkeit (Kühl- und Spülwasser, Speichel, Blut usw.) absaugt und zerlegt. Das Gemisch wird der Absaugeinheit über eine Sammelleitung 12 zugeführt, die über steuerbare 2/2-Ventile 14, 16, 18 mit zu den einzelnen Arbeitsplätzen führenden Leitungen 20, 22, 24 verbindbar ist. Der Luftanteil des angesaugten Gemisches wird von der Ansaugeinheit 10 an einem Luftauslaßstutzen 26 bereitgestellt, der mit einer in der Regel über das Gebäudedach geführten Leitung verbunden ist. Die Flüssigkeitsanteile des Gemisches werden von der Absaugeinheit 10 an einem Flüssigkeitsauslaßstutzen 26 bereitgestellt, der mit der Abwasserkanalisation verbunden ist.

Die Absaugeinheit weist einen elektrischen Antriebsmotor 30 auf, an dessen Unterseite eine Unterdruckpumpe 32 an sich bekannten Aufbaus angeflanscht ist, die beispielsweise ein auf einer Pumpenwelle sitzendes Gebläserad aufweist. An der Unterseite der Unterdruckpumpe 32 hängt ein insgesamt mit 34 bezeichneter Flüssigkeitsabscheidezyklon, der wiederum eine Austragpumpe 36 trägt.

Der Flüssigkeitsabscheidezyklon 34 hat einen das von der Sammelleitung 12 zugeführte Gemisch übernehmenden Eintrittsstutzen 38 und einen die von Flüssigkeit befreite Luft bereitstellenden Austrittstutzen 40, der über ein Schlauchstück 42 mit einem der beiden Einlässe eines 3/2-Umschaltventiles 44 verbunden ist. Dessen zweiter Eingang steht mit der Umgebungsatmosphäre in Verbindung, seine Arbeitsöffnung ist mit der Ansaugöffnung der Unterdruckpumpe 32 verbunden.

Die Steuerung des Umschaltventiles 44 erfolgt über eine Leitung 46 von einer zentralen Steuereinheit 48 her, welche über eine Leitung 50 auch den Antriebsmotor 30 mit Energie versorgt.

Die Steuereinheit 48 steuert über weitere Leitungen 52, 54, 56 das Arbeiten der Ventile 14, 16, 18, und zwar in Abhängigkeit von Steuersignalen, die über Leitungen 58, 60, 62 von den einzelnen Arbeitsplätzen dann überstellt werden, wenn dort ein Absaugen benötigt wird. Die Steuereinheit 48 ist ferner mit dem Ausgang eines Pegelfühlers 64 verbunden, der von der Umfangswand des Flüssigkeitsabscheidezyklons 34 getragen ist und dann anspricht, wenn der Flüssigkeitsspiegel im Flüssigkeitsabscheidezyklon 34 einen vorgegebenen, maximal zulässigen Wert überschreitet, so daß nicht mehr gewährleistet ist, daß die vom Zyklon abgegebene Luft völlig frei von flüssigen Bestandteilen ist. Unter derartigen Bedingungen schaltet die Steuereinheit 48 das Umschaltventil 44 dann in diejenige Stellung, in welcher Luft aus der Umgebungsatmosphäre angesaugt wird, während die Austragpumpe 36 weiterhin vom Antriebsmotor 30 angetrieben wird. Ist der Flüssigkeitsspiegel im Inneren des Flüssigkeitsabscheidezyklons 34 wieder unter den maximal zulässigen Pegel abgefallen, so bringt die Steuereinheit 48 das Umschaltventil 44 wieder in seine Normalstellung, in welcher die Unterdruckpumpe 32 mit dem Austrittstutzen 40 des Flüssigkeitsabscheidezyklons 34 verbunden ist.

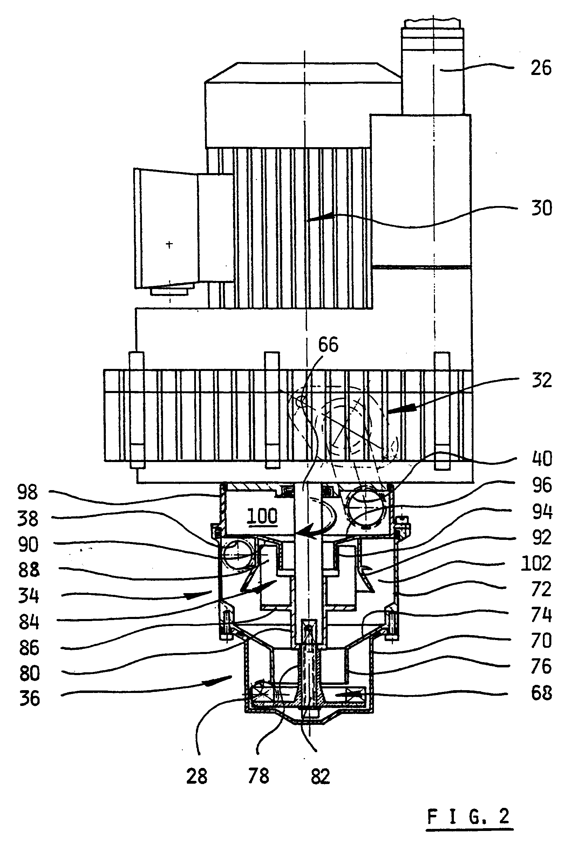

Figur 2 zeigt Einzelheiten des inneren Aufbaus der Absaugeinheit 10. Die Welle 66 des Antriebsmotors 30, welche zugleich die Pumpenwelle der Unterdruckpumpe 32 darstellt, ist durch den Flüssigkeitsabscheidezyklon 34 hindurchgezogen und trägt an ihrem freien Ende ein Pumpenlaufrad 68 der Austragpumpe 36. Letzteres läuft in einem becherförmigen Pumpengehäuse 70, welches dicht auf den Boden des mit 72 bezeichneten Gehäuses des Flüssigkeitsabscheidezyklons 34 aufgeschraubt ist.

Wie Figur 2 zeigt, hat das Zyklongehäuse 72 einen kegelförmig abfallenden Boden 74, der einen mittigen rohrförmigen Übergabestutzen 76 trägt. Dessen Duchmesser entspricht dem schaufelfreien Ansaugbereich des Pumpenlaufrades 68 und endet unter kurzem axialem Abstand über letzterem. Das aus Kunststoff gespritzte Pumpenlaufrad 68 hat einen hochgezogenen Nabenabschnitt 78, über welchen es unter Zwischenschalten eines Propellernabenabschnittes 80 mittels einer Schraube 82 mit der Welle 66 verspannt ist.

Der Propellernabenabschnitt 80 gehört zu einem insgesamt mit 84 bezeichneten Propeller, der ferner einen transversalen Scheibenabschnitt 86 und eine Mehrzahl in Umfangsrichtung verteilter Propellerflügel 88 aufweist. Letztere laufen in einer nach unten offenen Rinne 90, welche durch einen glockenförmigen Deflektorabschnitt 92 und einen hierzu koaxialen rohrförmigen Stutzen 94 begrenzt ist. Die letztgenannten feststehenden Teile des Zyklongehäuses 72 sind an einen Boden 96 eines becherförmigen Gehäusekopfteiles 98 angeformt, welches eine mit dem Luftaustrittsstutzen 40 in Verbindung stehende Austrittskammer 100 begrenzt. Das Gehäusekopfteil 98 ist dicht mit dem Zyklongehäuse 72 verschraubt.

Wie Figur 2 zeigt, mündet der Eintrittstutzen 40 für das Luft/Flüssigkeitsgemisch unmittelbar unterhalb des Bodens 96 des Gehäusekopfteiles 98 in die Umfangswand des Zyklongehäuses 72 und steht somit mit dem Ringraum 102 in Verbindung, welcher zwischen der Aussenseite des Deflektorabschnittes 92 und der Umfangswand des Zyklongehäuses 72 liegt.

Die in Figur 2 gezeigte Absaugeinheit arbeitet folgendermaßen:
Der Antriebsmotor 30 dreht das Gebläserad der Unterdruckpumpe 32, den Propeller 84 und das Pumpenlaufrad 68 gemeinsam, da diese Teile alle auf der Welle 66 sitzen. Auf Grund des von der Unterdruckpumpe 32 erzeugten Unterdruckes wird das Luft/Flüssigkeitsgemisch in den Eintrittstutzen 38 gezogen und durchläuft auf Grund seiner außermittigen Einleitung das Innere des Flüssigkeitsabscheidezyklons 34 auf einer wendelförmigen Bahn. Durch Zentrifugalkraft werden bei dieser Bewegung die schwereren Flüssigkeitsbestandteile aus dem Gemisch abgetrennt und fliessen unter Schwerkrafteinwirkung über den kegelfömigen Zyklonboden und den Übergabestutzen 76 in die Austragpumpe 36. Von deren Pumpenlaufrad 68 werden die abgetrennten flüssigen Bestandteile des Gemisches in den Flüssigkeitsauslaßstutzen 28 gedrückt.

Der Deflektorabschnitt 92 verhindert, daß Teile des eintretenden Luft/Flüssigkeitsgemisches direkt zu dem Stutzen 94 und von dort in die Austrittskammer 100 gelangen können.

Etwa auf Grund schaumbildender Bestandteile im zugeführten Gemisch enthaltener Schaum kann ebenfalls nicht in den Stutzen 94 gelangen, da er auf diesem Wege den Propeller 84 durchqueren muß. Hierbei wird der Schaum zum einen mechanisch zerschlagen, darüber hinaus wird er durch den Propeller 84 auch in sehr starke, rasche Drehung versetzt, sodaß eine weitere Flüssigkeitsabscheidung durch Zentrifugalkraft erfolgt. Diese Abscheidung ist auch deshalb besonders effektiv, da der Propeller 84 in einem Drehsinne umläuft, der der Drehrichtung des wendelförmigen Weges des Gemisches durch den Flüssigkeitsabscheidezyklon 34 entgegengesetzt ist. Aus dem Inneren des Zyklongehäuses gelangt somit nur vollständig von flüssigen Bestandteilen befreite Luft durch den Propeller 84 hindurch zum Stutzen 94 und von dort in die Austrittskammer 100.

Man erkennt, daß die Absaugeinheit 10 sehr kompakte Abmessungen aufweist und am Einsatzort nur drei Stömungsverbindungen herzustellen sind, nämlich die zur Sammelleitung 12, die am Luftauslaßstutzen 26 und die am Flüssigkeitsauslaßstutzen 28. Auch für die elektrische Installation brauchen nur wenige Verbindungen hergestellt zu werden.

Man erkennt ferner, daß bei der oben beschriebenen Absaugeinheit der Antriebsmotor 30 für drei verschiedene Zwecke genutzt wird: die Erzeugung des Unterdruckes, das zwangsweise Austragen der abgeschiedenen Flüssigkeit durch die Austragpumpe 36 und das Zerschlagen und Zentrifugieren von Schaumbestandteilen des angesaugten Gemisches durch den Propeller 84.

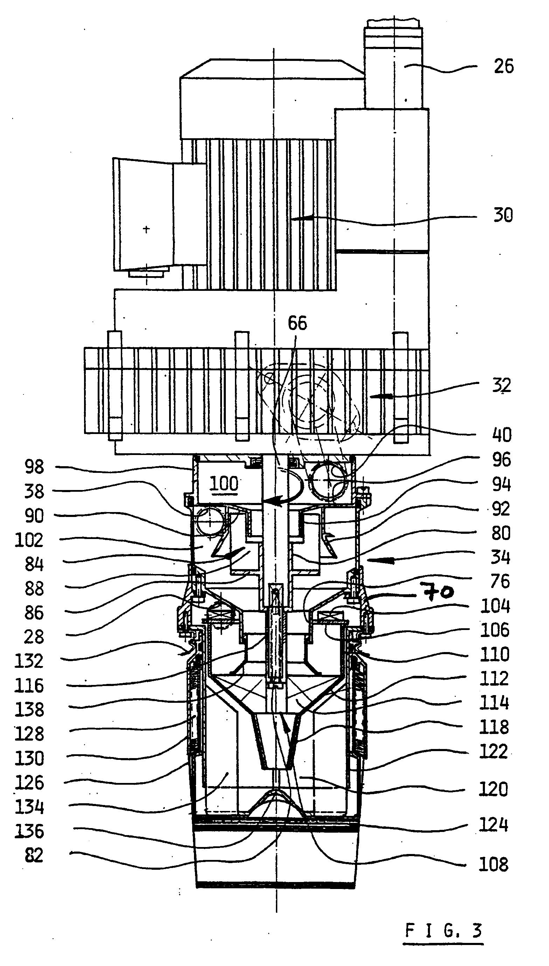

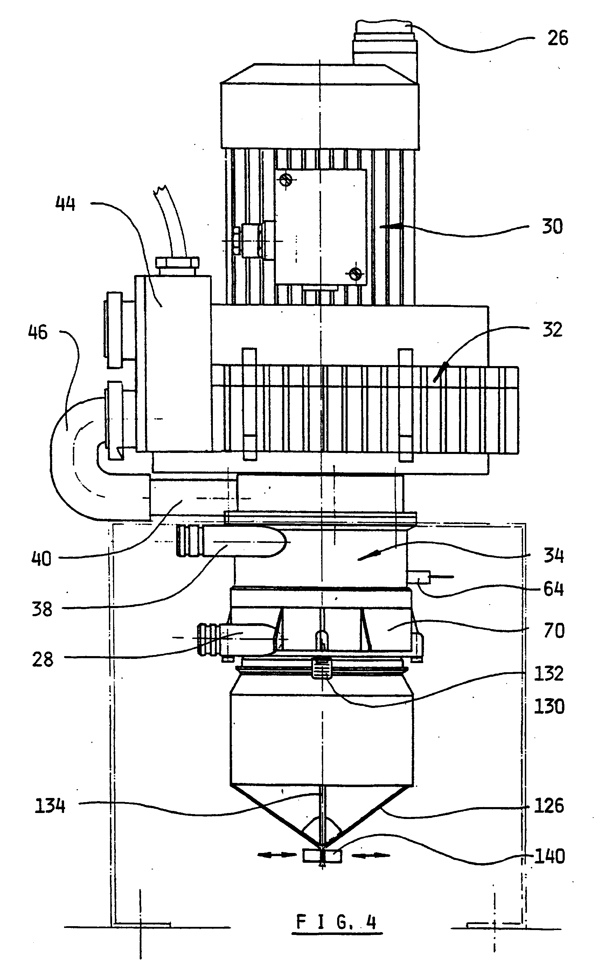

Bei dem in Figur 3 gezeigten abgewandelten Ausführungsbeispiel sind Bauteile der Absaugeinheit 10, welche obenstehend unter Bezugnahme auf die Figuren 1 und 2 schon erläutert wurden, wieder mit demselben Bezugszeichen versehen. Diese Bauteile werden nicht noch einmal im einzelnen beschrieben. Der Hauptunterschied des in Figur 3 und 4 gezeigten Ausführungsbeispieles zum Ausführungsbeispiel nach den Figuren 1 und 2 besteht darin, daß das Pumpenlaufrad als Teil einer Überlaufzentrifugentrommel ausgebildet ist, welche zum Abscheiden von Amalgampartikeln aus der aus dem Gemisch abgetrennten Flüssigkeit dient.

Bei der Absaugeinheit nach Figur 3 bilden Pumpenflügel 104, die auf die obere Stirnfläche eines ringförmigen oberen Sperrflansches 106 einer insgesamt mit 108 bezeichneten Zentrifugentrommel aufgesetzt sind, ein Pumpenlaufrad zum zwangsweisen Austragen der abgeschiedenen Flüssigkeit.

Die Zentrifugentrommel 108 hat eine zylindrische Umfangswand 110, an deren oberem Ende der Sperrflansch 106 radial nach innen ragend angebracht ist, sowie einen kegelförmig abfallenden Boden 112, der über mehrere in Umfangsrichtung verteilte radiale Flügel 114 mit einem Nabenabschnitt 116 verbunden ist. Letzterer ist wieder mittels der Schraube 82 unter Zwischenschaltung des Propellers 84 mit der Welle 66 verspannt.

Ein mittiger Abschnitt des Bodens 112 der Zentrifugentrommel 108 trägt einen kegelförmigen, sich nach unten verjüngenden Übergabe- und Rückförderstutzen 118, der in eine Sedimentierkammer 120 hineinragt, die sich unterhalb der Zentrifugentrommel 108 befindet und zum Teil durch ein zylindrisches, nach unten offenes Sedimentiergehäuse 122, zum Teil durch einen unten durch eine transversale Schweißnaht 124 dicht verschlossenen Sammelbeutel 126 dicht begrenzt ist. Letzterer ist dicht über die Aussenfläche des Sedimentiergehäuses 122 gezogen, wobei ein zickzackförmig aufgeschossener Vorrat 128 an schlauchförmigem Beutelmaterial im Inneren einer Kartusche 130 angeordnet ist, die dicht auf die Aussenfläche des Sedimentiergehäuses 122 aufgeschoben ist und über Bügelfedern 132 axial festgelegt ist. Das Sedimentiergehäuse 122 ist dicht mit dem nun nach unten offen ausgebildeten Pumpengehäuse 70 verbunden.

Im Inneren der Sedimentierkammer 120 ist eine Mehrzahl in radialen Ebenen liegender Beruhigungsflügel 134 vorgesehen, die in Umfangsrichtung verteilt an die Innenwand des Sedimentiergehäuses 122 angeformt sind und unter Abstand vor der Zentrifugentrommel 108 enden. An ihrem unteren Ende sind die Beruhigungsflügel 134 durch einen kegelfömigen Verteilabschnitt 136 verbunden, der ebenfalls einen einstückig gespritzten Teil des Sedimentiergehäuses 122 darstellt und dazu dient, Amalgamschlamm, der beim Anhalten des Antriebsmotors 30 unter Schwerkrafteinwirkung von der Umfangswand 110 der Zentrifugentrommel 108 über deren Boden 112 und den Übergabe- und Rückförderstutzen 118 in die Sedimentierkammer 120 absinkt, in Umfangsrichtung zu verteilen.

Die in Figur 3 und 4 gezeigte Absaugeinheit arbeitet in ihren Grundzügen ähnlich wie die obenstehend unter Bezugnahme auf die Figuren 1 und 2 erläuterte Absaugeinheit. Die abgetrennten flüssigen Bestandteile des über die Sammelleitung 12 zugeführten Gemisches werden jedoch vom Stutzen 94, der durch ein weiteres, sich am unteren Ende kegelförmig erweiterndes Stutzenteil 138 bis unmittelbar über die Oberkante der Flügel 114 verlängert ist, ins Innere der Zentrifugentrommel 108 geleitet. Dort wird die Flüssigkeit durch die Flügel 114 rasch in Drehung versetzt, und unter der Einwirkung der Zentrifugalkraft scheiden sich die mitgeschleppten Amalgampartikel auf der Umfangswand 110 ab. Gereinigtes Wasser strömt über den ringförmigen Zwischenraum, der durch die Innenkante des Sperrflansches 106 und die Aussenfläche des Stutzens 76 begrenzt ist, in das Pumpengehäuse 70 und wird durch die Pumpenflügel 104 in den Flüssigkeitsauslaßstutzen 28 gedrückt.

Wird der Antriebsmotor 30 nach Beendigung der Arbeitszeit abgeschaltet, so sinkt der in der Zentrifugentrommel 108 zurückgehaltene Amalgamschlamm in die Sedimentierkammer 120 ab, wie oben beschrieben. Dort setzen sich die im Schlamm enthaltenen Amalgampartikel unter Schwerkrafteinwirkung ab, und man erhält über dem so entstehenden Sediment eine verhältnismäßig klare Flüssigkeitsschicht, die von dem Übergabe- und Rückförderstutzen 118 dann wieder ins Innere der Zentrifugentrommel 108 zurückgepumpt wird, wenn der Antriebsmotor 30 wieder in Gang gesetzt wird.

Hat sich im Sammelbeutel 126 eine vorgegebene Amalgammenge abgeschieden, so wird der Sammelbeutel axial nach unten weggezogen und durch eine weitere transversale Schweissnaht am oberen Ende verschlossen, wozu die Absaugeinheit zwei senkrecht zur Geräteachse bewegbare Schweissbalken 140 aufweist, wie in Figur 4 gezeigt.

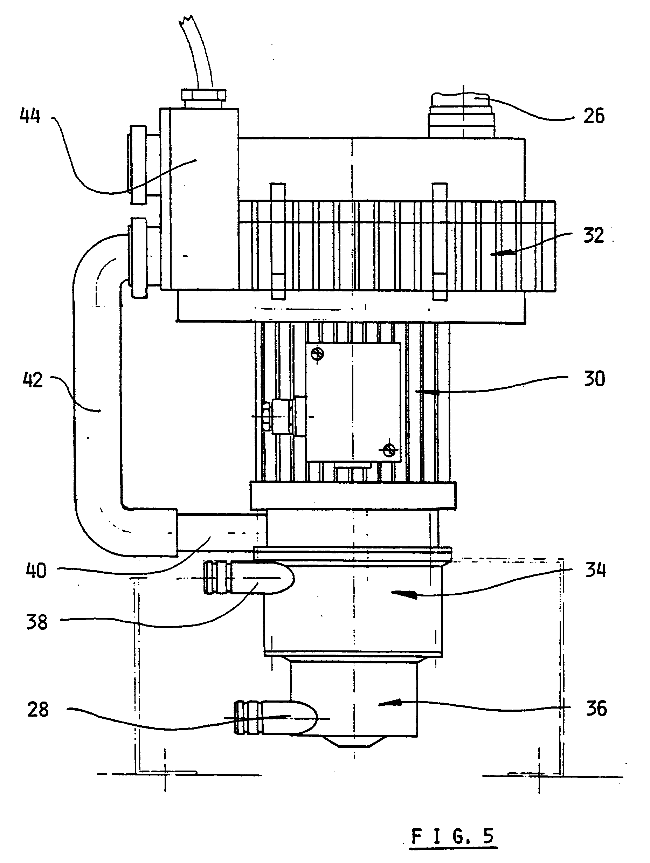

Figur 5 zeigt ein weiter abgewandeltes Ausführungsbeispiel, welches aus der Absaugeinheit nach Figur 1 und 2 dadurch abgeleitet ist, daß der Flüssigkeitsabscheidezyklon 34 und die von ihm getragene Austragpumpe 36 auf die eine Stirnfläche des Antriebsmotors 30 aufgesetzt sind, wobei der innere Aufbau von Flüssigkeitsabscheidezyklon 34 und Austragpumpe 36 genau gleich ist wie in Figur 2 gezeigt.

Bei dem in Figur 5 gezeigten Ausführungsbeispiel ist aber die Motorwelle auch über die zweite Stirnfläche des Motorgehäuses hinausgezogen und trägt das Gebläserad der Unterdruckpumpe 32, die nunmehr auf die in Figure 5 obenliegende zweite Stirnfläche des Antriebsmotors 30 aufgesetzt ist.

Auf diese Weise erhält man einen grösseren axialen, vertikalen Abstand zwischen der Unterdruckpumpe 32 und dem Flüssigkeitsabscheidezyklon 34, so daß auch bei Beaufschlagung des Flüssigkeitsabscheidezyklons 34 mit größeren Schwallwassermengen keine Flüssigkeit in die Unterdruckpumpe 32 gelangt; das nun längere Schlauchstück 42 dient als zusätzlich zur Verfügung stehende Pufferstrecke.

Im übrigen arbeitet die Absaugeinheit nach Figur 5 gleich wie die in Figur 1 und 2 gezeigte.

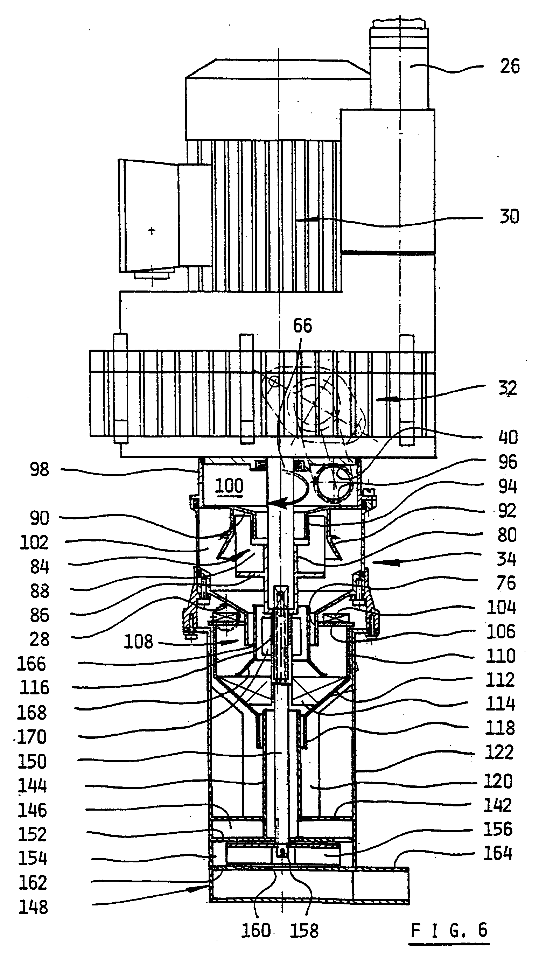

Bei der in Figur 6 gezeigten Absaugeinheit sind Teile, die obenstehend unter Bezugnahme auf Figur 3 schon beschrieben wurden, wieder mit denselben Bezugszeichen versehen. Diese Teile werden nicht noch einmal detailliert beschrieben. Der Hauptunterschied der Absaugeinheit nach Figur 6 zu derjenigen nach Figur 3 liegt darin, daß die Zufuhr des am Arbeitsplatz anfallenden Gemisches aus Luft, Flüssigkeit und Feststoffpartikeln von unten her erfolgt. Das Sedimentiergehäuse 122 ist als festes Teil ausgebildet und hat einen die Sedimentierkammer 120 unten begrenzenden Boden 142. Von diesem steht ein zentrales Leitrohr 144 nach oben, welches durch den Übergabe-/Rückförderstutzen 118 durchsetzt und bis kurz über den Boden 112 der Zentrifugentrommel 108 geführt ist. Das Innere des Leitrohres 144 steht mit einer Auslaßkammer 146 einer insgesamt mit 148 bezeichneten Speisepumpe in Verbindung, die auf das untere Ende des Sedimentiergehäuses 122 aufgesetzt ist. Der Einfachheit halber sind in der Zeichnung Pumpengehäuse und Sedimentiergehäuse 122 also einstückiges Teil wiedergegeben; es versteht sich, daß sie in der Praxis aus mehreren aneinandergesetzten becherförmigen Spritzteilen bestehen. Die Schraube 82 hat nunmehr einen als Welle 150 ausgebildeten gestreckten Kopf. Die Welle 150 erstreckt sich durch das Leitrohr 144 hindurch und durchquert im Gleitspiel eine obere Stirnwand 152 einer Pumpenkammer 154. In letzterer läuft ein Pumpenrad 156 um, welches auf einen geschlitzten Endabschnitt 158 der Welle 150 lösbar im Schnappsitz aufgesetzt ist. Das Pumpenrad 156 saugt über eine mittige Öffnung 160 einer unteren Stirnwand 162 der Pumpenkammer 154 das am Arbeitsplatz anfallende Gemisch an, welches über einen nicht näher gezeigten Schlauch zu einem Einlaßstutzen 164 der Absaugeinheit geführt wird.

Mit der Zentrifugentrommel 108 ist ein Trennrohr 166 drehfest verbunden, welches von der Form her dem Stutzenteil 138 ähnelt und einen sich kegelförmig erweiternden unteren Trennrohrabschnitt 168 hat. Dessen freie Randkante hat größeren Abstand von der Trommelachse als der innere Rand des Sperrflansches 106. Das Trennrohr 166 ist über radiale Arme 170 mit dem Nabenabschnitt 116 der Zentrifugentrommel 108 verbunden.

Bei der in Figur 6 gezeigten Absaugeinheit wird das zugeführte Luft-/Flüssigkeits-/Feststoffpartikel-Gemisch von der Speisepumpe 148 durch das Leitrohr 144 in das untere Ende der Zentrifugentrommel 108 gefördert. Hier wird das Gemisch durch die Flügel 114 in rasche Drehung versetzt, wobei die leichten Luftbestandteile und Schaumbestandteile zur Trommelachse hin wandern, während die schweren Flüssigkeitsbestandteile und die Feststoffpartikel zur Umfangswand 110 der Zentrifugentrommel 108 wandern. Die so abgetrennte Luft tritt zusammen mit Schaumanteilen in das Innere des Trennrohres 166 ein, wobei wegen der das Trennrohr 166 tragenden Arme 170 ein weiteres starkes Zentrifugieren erfolgt. Hierbei gebildete Flüssigkeitsanteile gelangen über den sich kegelförmig erweiternden Trennrohrabschnitt 168 wieder zurück ins Innere der Zentrifugentrommel 108.

Die Luftanteile und etwaige Schaum-Restanteile werden vom oberen Ende des Trennrohres 166 ins Innere des Zyklons 34 abgegeben, wo eine weitere Flüssigkeitsabscheidung stattfindet. Letzteres zum einen durch den Drall der Luftbewegung, zum anderen unter der Einwirkung des Propellers 84. Es gelangt somit nur von Flüssigkeitsanteilen befreite Luft in den Austrittsstutzen 40.

## Patentansprüche

1. Zahnärztliche Absaugeinrichtung, mit einer ein umlaufendes Pumpelement aufweisenden Unterdruckpumpe (32), mit einem auf die Pumpenwelle arbeitenden Antriebsmotor (30), mit einer der Einlaßöffnung der Unterdruckpumpe vorgeschalteten Einrichtung (34) zum Abtrennen von Flüssigkeit aus dem der Absaugeinrichtung zugeführten Luft/Flüssigkeitsgemisch, wobei die Einlaßöffnung der Unterdruckpumpe (32) mit der Luftauslaßöffnung der Luft/Flüssigkeits-Trenneinrichtung (34) verbunden ist, und mit einer, ein in einem Austragpumpengehäuse (70) umlaufendes Pumpenlaufrad (68; 104, 106) aufweisenden Austragpumpe (36) für die abgetrennte Flüssigkeit, dadurch gekennzeichnet, daß ein Abschnitt der Antriebswelle (66) das Pumpenlaufrad (68; 104, 106) der Austragpumpe (36) trägt; und daß die Luft/Flüssigkeits-Trenneinrichtung (34), die Unterdruckpumpe (32) und die Austragpumpe (36) zu einer Einheit zusammengefaßt sind.

2. Absaugeinrichtung nach Anspruch 1, dadurch gekennzeichnet, daß die Luft/Flüssigkeits-Trenneinrichtung einen Flüssigkeitsabscheidzyklon (34) aufweist, der an axial beabstandeten Stellen seines Gehäuses mit einer Eintrittsöffnung für das Luft/Flüssigkeitsgemisch und einer Austrittsöffnung für von Flüssigkeit befreite Luft versehen ist und in seinem unteren Abschnitt eine Flüssigkeitsaustragöffnung aufweist; und daß die Flüssigkeitsaustragöffnung (76) des Flüssigkeitsabscheidezyklons (34) über der Einlaßöffnung der Austragpumpe (36) liegt und mit dieser in Verbindung steht, so daß die im Flüssigkeitsabscheidezyklon (34) aus dem Gemisch abgetrennte Flüssigkeit unter Schwerkrafteinwirkung in die Austragpumpe (36) fließt.

3. Absaugeinrichtung nach Anspruch 2, dadurch gekennzeichnet, daß die Flüssigkeitsaustragöffnung (76) des Flüssigkeitsabscheidezyklons (34) in einem mittigen Abschnitt des Bodens (74) des Zyklongehäuses angeordnet ist und der Flüssigkeitsabscheidezyklon (34) koaxial zum Pumpenlaufrad (68; 104, 106) dicht auf das Pumpengehäuse (70) aufgesetzt ist und seinerseits die Unterdruckpumpe (32) trägt.

4. Absaugeinrichtung nach einem der Ansprüche 1 bis 3, dadurch gekennzeichnet, daß die Luft/Flüssigkeits-Trenneinrichtung (34) auf die eine Stirnseite des Antriebsmotors (30) koaxial aufgesetzt ist und ihrerseits ebenfalls koaxial die Austragpumpe (36) trägt, während die Unterdruckpumpe (32) koaxial auf die zweite Stirnseite des Antriebsmotors (30) aufgesetzt ist.

5. Absaugeinrichtung nach einem der Ansprüche 1 bis 4, dadurch gekennzeichnet, daß die das Pumpenlaufrad tragende Antriebswelle (66) sich in einen oberen Abschnitt eines Gehäuses (72) der Trenneinrichtung (34) hinein erstreckt und dort einen Propeller (84) trägt, der mit Flügeln (88) besetzt ist, die zwischen einem Luftaustrittsstutzen (94) und einem diesen koaxial unter Abstand umgebenden Deflektorteil (92) unter Spiel hindurchtreten.

6. Absaugeinrichtung nach einem der Ansprüche 1 bis 5, dadurch gekennzeichnet, daß der Boden (74) des Gehäuses (72) der Luft/Flüssigkeits-Trenneinrichtung zur Bodenmitte hin abfällt.

7. Absaugeinrichtung nach Anspruch 6, dadurch gekennzeichnet, daß der Boden (74) des Gehäuses (72) der Luft/Flüssigkeits-Trenneinrichtung einen mittigen Stutzen (76) trägt, welcher kurz über dem Ansaugabschnitt des Pumpenlaufrades (68) endet.

8. Absaugeinrichtung nach einem der Ansprüche 1 bis 7, dadurch gekennzeichnet, daß das Pumpenlaufrad durch einen oberen Sperrflansch (106) und auf diesen aufgesetzte Pumpenflügel (104) einer Zentrifugentrommel (108) gebildet ist, die auf die Antriebswelle (66) aufgesetzt ist.

9. Absaugeinrichtung nach Anspruch 8, dadurch gekennzeichnet, daß unterhalb der Zentrifugentrommel (108) eine Sedimentierkammer (120) angeordnet ist, mit der der Innenraum der Zentrifugentrommel (108) über einen vom Trommelboden (112) getragenen Übergabe- und Rückpumpstutzen (118) in Verbindung steht.

10. Absaugeinrichtung nach einem der Ansprüche 1 bis 9, gekennzeichnet durch ein steuerbares Umschaltventil (44), über welches die Ansaugöffnung der Unterdruckpumpe (32) wahlweise anstelle mit der Luftaustrittsöffnung (40) der Luft/Flüssigkeits-Trenneinrichtung (34) mit der Umgebungsatmosphäre verbindbar ist.

11. Absaugeinrichtung nach Anspruch 10, gekennzeichnet durch einen der Luft/Flüssigkeits-Trenneinrichtung (34) zugeordneten Flüssigkeitspegelfühler (64), durch dessen Ausgangssignal das Umschaltventil (44) gesteuert wird.

12. Absaugeinrichtung nach einem der Ansprüche 1 bis 11, dadurch gekennzeichnet, daß die Gemischeintrittsöffnung (38) der Luft/Flüssigkeits-Trenneinrichtung (34) an eine Sammelleitung (12) angeschlossen ist, mit welcher eine Mehrzahl von Arbeitsplatzleitungen (20 bis 24) verbunden ist.

13. Absaugeinrichtung nach Anspruch 12, dadurch gekennzeichnet, daß die Arbeitsplatzleitungen (20 bis 24) jeweils über ein steuerbares Trennventil (14 bis 18) mit der Sammelleitung (12) verbindbar sind.

14. Absaugeinrichtung nach einem der Ansprüche 8 bis 13, dadurch gekennzeichnet, daß die Trenneinrichtung ein mit der Zentrifugentrommel (108) umlaufendes, zur Trommelachse koaxiales Trennrohr (166) aufweist, welches unter radialem Spiel durch den Sperrflansch (106) der Zentrifugentrommel (108) hindurchgeführt ist.

15. Absaugeinrichtung nach Anspruch 14, dadurch gekennzeichnet, daß ein unterer Trennrohrabschnitt (168) sich kegelförmig erweitert.

16. Absaugeinrichtung nach Anspruch 15, dadurch gekennzeichnet, daß der Rand des unteren Trennrohrabschnittes (168) größeren Abstand von der Trommelachse aufweist als der innere Rand des Sperrflansches (106).

## Claims

1. Dental aspirator, with a suction pump (32) comprising a rotating pump member, with a drive motor (30) acting on the pump shaft, with a device (34) preceding the inlet opening of the suction pump, for separating liquid from the air/liquid mixture supplied to the aspirator, the inlet port of the suction pump (32) communicating with the air outlet port of the air/liquid separating device, and with a delivery pump (36) for the separated liquid comprising a pump impeller (68; 104, 106) rotating in a delivery pump casing (70), characterised in that a section of the drive shaft (66) supports the pump impeller (68; 104, 106) of the delivery pump (36) and that the air/liquid separating device (34), the suction pump (32) and the delivery pump (36) are combined as one unit.

2. Aspirator according to Claim 1, characterised in that the air/liquid separating device comprises a liquid separating cyclone (34), which is provided at axially spaced points of its housing with an inlet opening for the air/liquid mixture and an outlet opening for air from which liquid has been removed and in its lower section comprises a liquid discharge opening (76); and that the liquid discharge opening (76) of the liquid separating cyclone (34) lies above the inlet opening of the delivery pump (36) and is connected to the latter so that the liquid separated from the mixture in the liquid separating cyclone (34) flows under the action of gravity into the delivery pump (36).

3. Aspirator according to Claim 2, characterised in that the liquid discharge opening (76) of the liquid separating cyclone (34) is located in a central section of the base (74) of the cyclone casing and the liquid separating cyclone (34) is fitted in a tight manner to the pump casing (70) coaxial to the pump impeller (68; 104, 106) and in turn supports the suction pump (32).

4. Aspirator according to one of Claims 1 to 3, characterised in that the air/liquid separating device (34) is fitted coaxially to one end face of the drive motor (30) and in turn supports the delivery pump (36) likewise coaxially, whereas the suction pump (32) is fitted coaxially to the second end face of the drive motor (30).

5. Aspirator according to one of Claims 1 to 4, characterised in that the drive shaft (66) supporting the pump impeller extends in an upper section of a housing (72) of the separating device (34) and at this point supports a propeller (84), which is provided with blades (88), which pass with clearance between an air outlet connection (94) and a deflector part (92) surrounding the latter coaxially at a distance.

6. Aspirator according to one of Claims 1 to 5, characterised in that the base (74) of the housing (72) of the air/liquid separating device slopes downwards towards the centre of the base.

7. Aspirator according to Claim 6, characterised in that the base (74) of the housing (72) of the air/liquid separating device supports a central connection (76), which terminates a short distance above the suction section of the pump impeller (68).

8. Aspirator according to one of Claims 1 to 7, characterised in that the pump impeller is formed by an upper blocking flange (106) and pump vanes (104) of a centrifuge drum (108) fitted thereon, which centrifuge drum (108) is fitted on the drive shaft (66).

9. Aspirator according to Claim 8, characterised in that located below the centrifuge drum (108) is a sedimentation chamber (120), to which the inside of the centrifuge drum (108) is connected by way of a transfer and return connection (118) supported by the drum base (112).

10. Aspirator according to one of Claims 1 to 9, characterised by a controllable change-over valve (44), by which the suction opening of the suction pump (32) can be connected optionally to the atmosphere instead of to the air outlet opening (40) of the air/liquid separating device (34).

11. Aspirator according to Claim 10, characterised by a liquid level sensor (64) associated with the air/liquid separating device (34), the output signal of which sensor controls the change-over valve (44).

12. Aspirator according to one of Claims 1 to 11, characterised in that the mixture inlet opening (38) of the air/liquid separating device (34) is connected to a collecting line (12), to which a plurality of working position lines (20 to 24) is connected.

13. Aspirator according to Claim 12, characterised in that the working position lines (20 to 24) can each be connected by way of a controllable separating valve (14 to 18) to the collecting line (12).

14. Aspirator according to one of Claims 8 to 13, characterised in that the separating device comprises a separating column (166) rotating with the centrifuge drum (108) and coaxial to the drum axis, which is guided with radial clearance through the blocking flange (106) of the centrifuge drum (108).

15. Aspirator according to Claim 14, characterised in that a lower separating column section (168) widens out conically.

16. Aspirator according to Claim 15, characterised in that the edge of the lower separating column section (168) is at a greater distance from the drum axis than the inner edge of the blocking flange (106).

## Revendications

1. Dispositif d'aspiration dentaire comportant une pompe à vide (32) présentant un élément tournant, un moteur de commande (30) agissant sur l'arbre de pompe, un dispositif de séparation du liquide contenu dans le mélange d'air et de liquide alimentant le dispositif d'aspiration, l'orifice d'entrée de la pompe à vide (32) communiquant avec l'orifice de sortie d'air du dispositif de séparation air/liquide, lequel dispositif de séparation est installé en amont de l'orifice d'entrée de la pompe à vide, et une pompe d'évacuation (36) du liquide séparé présentant une roue à palettes (68; 104, 106) tournant dans un corps de pompe (70), caractérisé en ce qu'un tronçon de l'arbre de commande (66) porte la roue à palettes (68; 104, 106) de la pompe d'évacuation (30) et en ce que le dispositif de séparation d'air et de liquide (34), la pompe à vide (32) et la pompe d'évacuation (36) sont réunis de manière à former une unité.

2. Dispositif d'aspiration suivant la revendication 1, caractérisé en ce que le dispositif de séparation d'air et de liquide présente un cyclone de séparation de liquide (34), lequel comporte en des endroits axialement espacés de son corps un orifice d'entrée du mélange d'air et de liquide et un orifice de sortie d'air libéré du liquide et présente à son extrémité inférieure un orifice d'évacuation du liquide (76), et en ce que l'orifice d'évacuation du liquide (76) du cyclone de séparation de liquide (34) se trouve au-dessus de l'orifice d'entrée de la pompe d'évacuation (36) et communique avec celui-ci, de sorte que le liquide séparé du mélange au sein du cyclone de séparation de liquide (34) s'écoule sous l'effet de la pesanteur dans la pompe d'évacuation (36).

3. Dispositif d'aspiration suivant la revendication 2, caractérisé en ce que l'orifice d'évacuation du liquide (76) du cyclone de séparation de liquide (34) est prévu dans une partie centrale du fond (74) du corps du cyclone et en ce que le cyclone de séparation de liquide (34) est installé de manière étanche sur le corps de pompe (70) coaxialement à la roue à palettes (68; 104, 106) et supporte de son côté la pompe à vide (32).

4. Dispositif d'aspiration suivant une des revendications 1 à 3, caractérisé en ce que le dispositif de séparation d'air et de liquide (34) est installé d'un côté du moteur de commande (30), coaxialement à celui-ci, et supporte à son tour la pompe d'évacuation (36) prévus également de manière coaxiale, tandis que la pompe à vide (32) est installée de l'autre côté du moteur de commande (30) coaxialement à celui-ci.

5. Dispositif d'aspiration suivant une des revendications 1 à 4, caractérisé en ce que l'arbre de commande (66) portant la roue à palettes se prolonge dans une partie supérieure du corps (72) du dispositif de séparation (34) et y supporte une hélice (84) présentant des ailettes (88), lesquelles se projettent selon un certain jeu entre un manchon de sortie d'air (94) et un déflecteur (92) entourant coaxialement celui-ci à une certaine distance de celui-ci.

6. Dispositif d'aspiration suivant une des revendications 1 à 5, caractérisé en ce que le fond (74) du corps (72) du dispositif de séparation d'air et de liquide est incliné vers le bas en direction de son centre.

7. Dispositif d'aspiration suivant la revendication 6, caractérisé en ce que le fond (74) du corps (72) du dispositif de séparation d'air et de liquide supporte un manchon central (76), lequel se termine à une faible distance au-dessus de la région d'aspiration de la roue à palettes (68).

8. Dispositif d'aspiration suivant une des revendications 1 à 7, caractérisé en ce que la roue à palettes est formée par une collerette de retenue supérieure (106) d'un panier de centrifugeuse (108) et par des palettes de pompe (104) prévues sur ladite collerette de retenue, lequel panier (108) est monté sur l'arbre de commande (66).

9. Dispositif d'aspiration suivant la revendication 8, caractérisé en ce que sous le panier de centrifugeuse (108) se trouve disposée une chambre de sédimentation (120), avec laquelle le volume intérieur du panier de centrifugeuse (108) communique par l'intermédiaire d'un manchon d'évacuation et de refoulement (118) supporté par le fond (112) du panier (108).

10. Dispositif d'aspiration suivant une des revendications 1 à 9, caractérisé en ce qu'il y est prévu une soupape d'inversion (44) pouvant être commandée, su moyen de laquelle l'orifice d'aspiration de la pompe à vide (32) peut être facultativement relié à l'atmosphère environnante au lieu de l'orifice de sortie d'air (40) du dispositif de séparation d'air et de liquide (34).

11. Dispositif d'aspiration suivant la revendication 10, caractérisé en ce qu'il y est prévu un détecteur de niveau de liquide (64) associé au dispositif de séparation d'air et de liquide (34), au moyen du signal de sortie duquel la soupape d'inversion (44) peut être commandée.

12. Dispositif d'aspiration suivant une des revendications 1 à 11, caractérisé en ce que l'orifice d'entrés du mélange (38) du dispositif de séparation d'air et de liquide (34) est raccordé à une canalisation principale (12), à laquelle sont reliées une pluralité de canalisations (20 à 24) provenant des différents postes de travail.

13. Dispositif d'aspiration suivant la revendication 12, caractérisé en ce que les canalisations (20 à 24) provenant des différents postes de travail peuvent chacuns être reliées à la conduite principale (12) au moyen d'une électrovanne (14 à 18) individuelle.

14. Dispositif d'aspiration suivant une des revendications 8 à 13, caractérisé en ce que le dispositif de séparation présente un tube de séparation (166) coaxial à l'axe du panier de centrifugeuse (108) et tournant avec celui-ci, lequel tube de séparation se trouve inséré avec un certain jeu radial dans la collerette de retenue (106) du panier de centrifugeuse (108).

15. Dispositif d'aspiration suivant la revendication 14, caractérisé en ce qu'une partie inférieure (168) du tube de séparation (166) s'élargit coniquement.

16. Dispositif d'aspiration suivant la revendication 15, caractérisé en ce que le bord de la partie inférieure (168) du tube de séparation (166) se trouve à une plus grande distance radiale de l'axe du panier de centrifugeuse (108) que le bord intérieur de la collerette de retenue (106).
